# EUROPÄISCHE PATENTSCHRIFT

(11) **EP 2 078 879 B1**
(45) Veröffentlichungstag und Bekanntmachung des Hinweises auf die Patenterteilung: **26.10.2011**
(21) Anmeldenummer: 08000492.2
(22) Anmeldetag: 11.01.2008
(51) Int. Cl.: F16D 23/06

(54) **Synchronisiereinrichtung für Schaltgetriebe**
Synchronising device for gearbox
Dispositif de synchronisation pour boîte de vitesses

(43) Veröffentlichungstag der Anmeldung: 15.07.2009
(73) Patentinhaber: HOERBIGER SynchronTechnik GmbH & Co. KG, 71720 Oberstenfeld (DE)
(72) Erfinder: Ledetzky, Erol, 74074 Heilbronn (DE)
(74) Vertreter: Kitzhofer, Thomas

(56) Entgegenhaltungen:
- EP-A- 1 408 250
- AT-B- 208 718
- GB-A- 523 246
- US-A- 3 631 952
- US-A- 4 584 892

## Beschreibung

Die Erfindung betrifft eine Synchronisiereinrichtung für ein Handschaltgetriebe gemäß dem Oberbegriff des Anspruches 1. Eine solche Synchronisiereinrichtung ist aus EP-A-1 408 250 bekannt.

Bei bisher bekannten Synchronisiereinrichtungen erfolgt eine Realisierung der Mitten- und Gangarretierung durch zusätzliche Bohrungen in der Synchronnabe bzw. der Führungsmuffe und zusätzlichen Rastierungen in der Schaltmuffe, und durch entsprechend zusätzliche Feder-Kugel-Anordnungen, die neben den ansonsten ohnehin vorgesehenen Druckstücken vorgesehen sind.

Es ist demgegenüber Aufgabe der vorliegenden Erfindung, eine technische Vereinfachung der Mitten- und Gangarretierung bei einer Synchronisiereinrichtung für ein Schaltgetriebe zu schaffen.

Die Lösung dieser Aufgabe erfolgt durch die Merkmale des Anspruchs 1.

Die Unteransprüche haben vorteilhafte Weiterbildungen der Erfindung zum Inhalt.

Erfindungsgemäß ergibt sich der Vorteil, dass zusätzliche Bohrungen und zusätzliche Rastiernuten in der Synchronnabe bzw. der Schaltmuffe entfallen können, wie auch die in diesen Ausnehmungen vorgesehenen Feder-Kugel-Anordnungen. Dementsprechend wird der Montageaufwand für die erfindungsgemäße Synchronisiereinrichtung verringert und darüber hinaus ist eine Vorsynchronabhebung realisierbar.

Weitere Einzelheiten, Vorteile und Merkmale der vorliegenden Erfindung ergeben sich aus nachfolgender Beschreibung von Ausführungsbeispielen anhand der beigefügten Zeichnung. Es zeigt:
- Fig. 1: eine teilweise geschnittene Darstellung eines Teils der erfindungsgemäßen Synchronisier- einrichtung,
- Fig. 2, 3: Detaildarstellung von Ausführungsformen von Vorsynchroneinheiten der erfindungsgemäßen Syn- chronisiereinrichtung,
- Fig. 4, 5: Draufsichten auf Vorsynchroneinheiten der er- findungsgemäßen Synchronisiereinrichtung,
- Fig. 6: eine perspektivische Darstellung von Teilen der erfindungsgemäßen Synchronisiereinrichtung, und
- Fig. 7, 8: eine Draufsicht und eine Seitenansicht einer weiteren Ausführungsform der erfindungsgemäßen Vorsynchroneinheit.

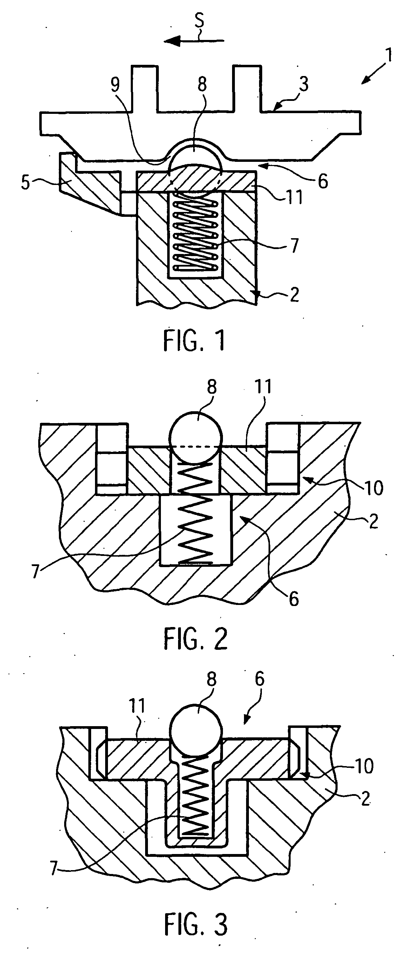

In Fig. 1 ist eine erste Ausführungsform einer erfindungsgemäßen Synchronisiereinrichtung 1 dargestellt, die für ein in seiner Gesamtheit nicht näher dargestelltes Schaltgetriebe, beispielsweise für ein Kraftfahrzeug, vorgesehen ist.

Die Synchronisiereinrichtung 1 weist eine Führungsmuffe 2 auf, die drehfest auf einer in den Figuren nicht näher dargestellten Getriebewelle angeordnet ist.

Auf der Führungsmuffe 2 ist eine Schaltmuffe 3 geführt.

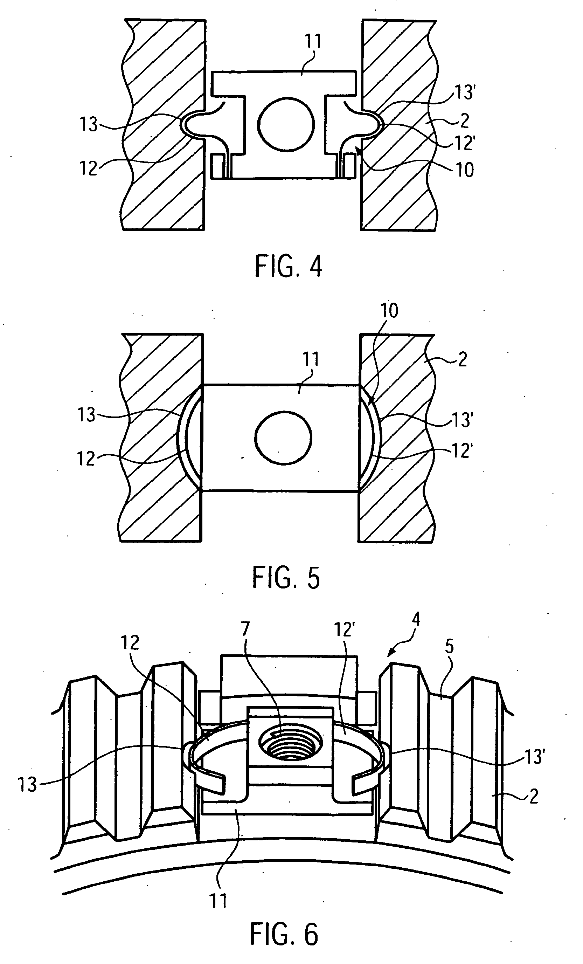

Ferner ist ein mit einem Losrad drehfest verbundener Kupplungskörper 4 (siehe Fig. 6) vorgesehen, der mit einer Auflaufschräge für einen Synchronring 5 mit entsprechender Reibfläche versehen ist, wobei der Synchronring 5 in der üblichen Art und Weise dazu dient, eine Drehzahlangleichung zwischen Losrad und Schaltmuffe vorzunehmen, damit letztendlich das Losrad verdrehfest mittels der Schaltmuffe 3 mit der Getriebewelle verbunden werden kann.

Erfindungsgemäß weist die Synchronisiereinrichtung 1 eine Vorsynchroneinheit 6 auf, die zunächst ein an der Führungsmuffe 2 abgestütztes Federelement 7 umfasst, das als Spiraldruckfeder ausgebildet ist.

Das Federelement 7 spannt ein im Beispielsfalle der Fig. 1, 2, 3 und 8 kugelförmiges Rastelement 8 in eine Rastiernut 9 der Schaltmuffe 3 vor.

Die erfindungsgemäße Vorsynchroneinheit 6 weist ferner einen Stein 11 auf, der zwischen der Schaltmuffe 3 und der Führungsmuffe 2 angeordnet ist.

Aus den Fig. 2 und 3 ergeben sich Ausführungsvarianten der Vorsynchroneinheit 6 der erfindungsgemäßen Synchronisiereinrichtung. Hierbei stellt Fig. 2 eine Ausführungsform dar, bei der die Vorsynchroneinheit 6 aus einzeln mit der Führungsmuffe 2 montierbaren Einzelteilen besteht. Diese sind ein Stein 11, das genannte Federelement 7, und das Rastelement 8.

Bei der Ausführungsform der Fig. 3 ist die Vorsynchroneinheit 6 als vormontierbare Einheit dargestellt, bei der der Stein 11 ein T-förmiges Gehäuse umfasst, in dem das Federelement 7 und das Rastelement 8 angeordnet ist.

Bei beiden Ausführungsformen wird die Vorsynchroneinheit 6 über eine Federanordnung 10 in der Führungsmuffe 2 elastisch abgestützt.

Mögliche Ausführungsformen für diese Federanordnung 10 ergeben sich insbesondere aus den Draufsichten der Fig. 4 und 5.

Bei der Ausführungsform gemäß Fig. 4 weist die Federanordnung 10 zwei Federn 12, 12' auf, die in zugeordnete Nuten 13 und 13' der Führungsmuffe 2 eingreifen. Die Federn 12 und 12' der Ausführungsform gemäß Fig. 4 sind einseitig im Stein 11 eingespannt und weisen eine Schleife auf, die in die Nut 13 bzw. 13' eingreift, so dass sich, wie aus der Draufsicht der Fig. 4 ersichtlich, eine seitliche Abstützung des Steins 11 über die Federanordnung 10 in der Führungsmuffe 2 ergibt.

Auch bei der Ausführungsform gemäß Fig. 5 ist eine derartige seitliche Abstützung vorgenommen, wobei wiederum zwei Federn 12 und 12' zu beiden Seiten des Steins 11 vorgesehen sind, die in in diesem Falle halbkugelartig ausgebildete Federnuten 13 und 13' der Führungsmuffe 2 eingreifen, was der Ausbildung der Federn 12, 12' entspricht.

Die Fig. 6 verdeutlicht eine perspektivische Ansicht des Steins 11 mit seinen entsprechend Fig. 4 ausgebildeten einseitig eingespannten Federn 12 und 12', die in die zugeordneten Federnuten 13 und 13' in Zähnen der Führungsmuffe 2 eingreifen. Zur Verdeutlichung dieser seitlichen Abstützung sind in Fig. 6 das Rastelement 8 und die Schaltmuffe 3 nicht dargestellt.

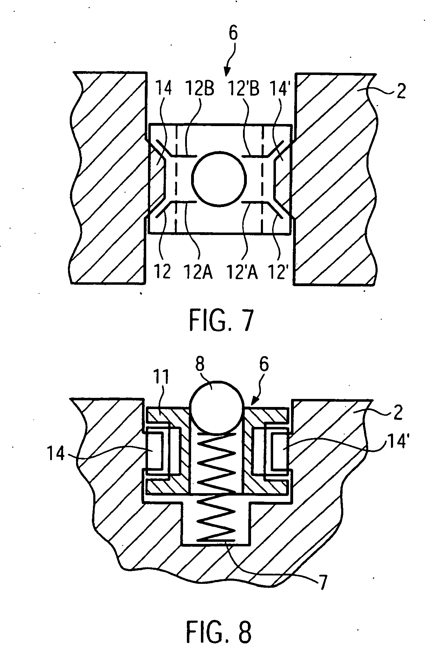

Aus den Fig. 7 und 8 ergeben sich weitere Ausführungsvarianten der Vorsynchroneinheit 6, wobei bei dieser Ausführungsform Nocken 14 und 14' der Führungsmuffe 2 vorgesehen sind, die von den Federn 12 bzw. 12' der Federanordnung 10 in der aus Fig. 7 ersichtlichen Art und Weise umgriffen werden, um die seitliche Führung des Steins 11 zu bewerkstelligen. Somit ist jede Feder 12 bzw. 12' bei dieser Ausführungsform durch eine Teilfeder 12a, 12b bzw. 12'A und 12'B gebildet, wie sich dies im einzelnen aus der Fig. 7 ergibt.

Bei allen zuvor genannten Ausführungsformen ist es möglich, den Stein 11 als Kunststoffteil auszubilden und die Federn der Federanordnung 10 jeweils als Blechfedern auszubilden, die am Stein 11 in geeigneter Art und Weise und je nach Ausführung der Federanordnung befestigt werden.

Die anhand der Fig. 3 dargestellte einteilige Ausführungsform der Anordnung aus Feder 7, Rastelement 8 und Stein 11 ist eine besonders bevorzugte Ausführungsform eines Druckstücks, das als vormontierte Einheit in der Führungsmuffe 2 anordenbar ist.

In Ergänzung zur schriftlichen Offenbarung wird hiermit explizit auf die zeichnerische Darstellung der Erfindung in den Fig. 1-8 Bezug genommen.

### Bezugszeichenliste

- 1: Synchronisiereinrichtung
- 2: Führungsmuffe
- 3: Schaltmuffe
- 4: Kupplungskörper
- 5: Synchronring
- 6: Vorsynchroneinheit
- 7: Federelement
- 8: Rastelement
- 9: Rastiernut
- 10: Federanordnung
- 11: Stein
- 12, 12', 12'A, 12'B: Federn
- 13, 13': Federnuten
- 14, 14': Nocken
- S: Schaltrichtung

## Patentansprüche

1. Synchronisiereinrichtung (1) für Schaltgetriebe
- mit einer Führungsmuffe (2), die drehfest auf einer Getriebewelle angeordnet ist,
- mit einer auf der Führungsmuffe (2) geführten Schaltmuffe (3),
- mit einem an einem Losrad (10) verdrehfest angeordneten Kupplungskörper (4),
- mit einem zwischen der Schaltmuffe (3) und dem Kupplungskörper (4) angeordneten Synchronring (5), und
- mit einer Vorsynchroneinheit (6), die folgendes aufweist:
• ein an der Führungsmuffe (2) abgestütztes Federelement (7),
• ein vom Federelement (7) in eine Rastiernut (9) der Schaltmuffe (3) vorspannbares Rastelement (8), und
• einen zwischen der Schaltmuffe (3) und der Führungsmuffe (2) angeordneten Stein (11),
**dadurch gekennzeichnet,**
- **dass** der Stein (11) mittels einer Federanordnung (10) elastisch an der Führungsmuffe (2) abgestützt ist.

2. Synchronisiereinrichtung nach Anspruch 1, **dadurch gekennzeichnet, dass** das Federelement (7) als Druckschraubenfeder ausgebildet ist.

3. Synchronisiereinrichtung nach Anspruch 1, **dadurch gekennzeichnet, dass** die Federanordnung (10) Federn (12, 12'; 12a, 12b; 12'A, 12'B) aufweist, die als Blechfeder ausgebildet sind.

4. Synchronisiereinrichtung nach einem der Ansprüche 1 bis 3, **dadurch gekennzeichnet, dass** der Stein (11) als Metallteil ausgebildet ist.

5. Synchronisiereinrichtung nach einem der Ansprüche 1 bis 3, **dadurch gekennzeichnet, dass** der Stein (11) als Kunststoffteil ausgebildet ist.

6. Synchronisiereinrichtung nach einem der Ansprüche 1 bis 5, **dadurch gekennzeichnet, dass** die Federanordnung (10) am Stein (11) fixiert ist.

7. Synchronisiereinrichtung nach einem der Ansprüche 1 bis 6, **dadurch gekennzeichnet, dass** die Federanordnung in Federnuten (13, 13') der Führungsmuffe (2) eingreift.

8. Synchronisiereinrichtung nach Anspruch 7, **dadurch gekennzeichnet, dass** die Federnuten (13, 13') in dem Stein (11) benachbart angeordneten Zähnen einer Außenverzahnung der Führungsmuffe (2) angeordnet sind.

## Claims

1. A synchronizing device (1) for a manual gearbox, comprising
- a guide sleeve (2) arranged on a gearbox shaft for joint rotation therewith;
- a shift collar (3) guided on the guide sleeve (2);
- a clutch body (4) arranged on an idler gear (10) so as to prevent relative rotation;
- a synchronizer ring (5) arranged between the shift collar (3) and the clutch body (4); and
- a pre-synchronizing unit (6) which includes:
• a spring member (7) supported at the guide sleeve (2);
• a detent member (8) adapted to be pretensioned by the spring member (7) into a detent groove (9) of the shift collar (3); and
• a block (11) arranged between the shift collar (3) and the guide sleeve (2),
**characterized in that**
- the block (11) is elastically supported on the guide sleeve (2) by means of a spring arrangement (10).

2. The synchronizing device according to claim 1, **characterized in that** the spring member (7) is in the form of a helical compression spring.

3. The synchronizing device according to claim 1, **characterized in that** the spring arrangement (10) includes springs (12, 12'; 12a, 12b; 12'A, 12'B) which are in the form of a sheet metal spring.

4. The synchronizing device according to any of claims 1 to 3, **characterized in that** the block (11) is in the form of a metal part.

5. The synchronizing device according to any of claims 1 to 3, **characterized in that** the block (11) is in the form of a plastic part.

6. The synchronizing device according to any of claims 1 to 5, **characterized in that** the spring arrangement (10) is fixed to the block (11).

7. The synchronizing device according to any of claims 1 to 6, **characterized in that** the spring arrangement engages in spring grooves (13, 13') of the guide sleeve (2).

8. The synchronizing device according to claim 7, **characterized in that** the spring grooves (13, 13') are arranged in teeth of an external toothing of the guide sleeve (2), the teeth being arranged adjacent to the block (11).

## Revendications

1. Dispositif de synchronisation (1) pour boîte de vitesses, comportant
- un manchon de guidage (2) qui est agencé solidaire en rotation sur un arbre de boîte de vitesses,
- un baladeur (3) guidé sur le manchon de guidage (2),
- un corps d'embrayage (4) agencé sur une roue folle (10) sans possibilité de rotation,
- une bague de synchronisation (5) agencée entre le baladeur (3) et le corps d'embrayage (4), et
- une unité de présynchronisation (6) qui présente:
• un élément ressort (7) qui prend appui sur le manchon de guidage (2),
• un élément d'enclenchement (8) qui peut être précontraint par l'élément ressort (7) dans une gorge d'enclenchement (9) du baladeur (3), et
• un galet (11) agencé entre le baladeur (3) et le manchon de guidage (2),
**caractérisé en ce que**
- le galet (11) est soutenu élastiquement sur le manchon de guidage (2) au moyen d'un agencement à ressort (10).

2. Dispositif de synchronisation selon la revendication 1, **caractérisé en ce que** l'élément ressort (7) est réalisé sous forme de ressort hélicoïdal de compression.

3. Dispositif de synchronisation selon la revendication 1, **caractérisé en ce que** l'agencement à ressort (10) présente des ressorts (12, 12' ; 12a, 12b ; 12'A, 12'B) qui sont réalisés sous forme de ressorts en tôle.

4. Dispositif de synchronisation selon l'une des revendications 1 à 3, **caractérisé en ce que** le galet (11) est réalisé sous forme de pièce métallique.

5. Dispositif de synchronisation selon l'une des revendications 1 à 3, **caractérisé en ce que** le galet (11) est réalisé sous forme de pièce en matière plastique.

6. Dispositif de synchronisation selon l'une des revendications 1 à 5, **caractérisé en ce que** l'agencement à ressort (10) est fixé sur le galet (11).

7. Dispositif de synchronisation selon l'une des revendications 1 à 6, **caractérisé en ce que** l'agencement à ressort s'engage dans des gorges à ressort (13, 13') du manchon de guidage (2).

8. Dispositif de synchronisation selon la revendication 7, **caractérisé en ce que** les gorges à ressort (13, 13') sont agencées dans des dents d'une denture extérieure du manchon de guidage (2), qui sont agencées au voisinage du galet (11).
